# EUROPEAN PATENT APPLICATION

(11) **EP 1 633 080 A1**
(43) Date of publication of application: **08.03.2006**
(21) Application number: 04255422.0
(22) Date of filing: 07.09.2004
(51) Int. Cl.: H04L 12/24

(54) **An interface for a network management system**

(71) Applicant: SIEMENS AKTIENGESELLSCHAFT, 80333 München (DE)
(72) Inventor: Pereira, Goncalo, Amadora (PT); Pessoa, Pedro, Lisboa (PT)
(74) Representative: Morgan, Marc

(57) **Abstract**

An interface (3) includes a hash function (5) for storing fields of network element alarms which cannot be processed by a network management system (4) into fields that can be processed.

## Description

This invention relates to an interface for network management system, in a communications network.

Communications networks are built from network elements. Examples of such elements include switches, multiplexers, modems or other basic units of a network.

The elements of the network may experience faults, high loading, low loading conditions which may require an intervention in the way the network is configured. For example, if a router develops a fault or is overloaded, traffic may be re-routed to avoid that router. In order to cater for this, network elements issue alarms to a network manager system (NMS).

The NMS is a computer implemented device which receives alarms and initiates remedial action such as re-configuring the network to re-route traffic.

The NMS are designed to operate within a standard and thus can cater only for a set of alarms with limited accompanying information of fixed length.

The network elements or an intermediary system called an Element Management System can produce alarms with more information than is permitted or acceptable to the NMS.

According to the invention there is provided an interface for a network management system to provide thereto compatible network element alarms which interface comprising an input for accepting incoming alarms generated by network elements and a hashing processor for applying a hash function to the incoming alarms to produce hashed alarms output to the network management system.

A hashing function in one which take an arbitrary amount of information and reduces it to a fixed number of bits. Thus, by use of the invention alarms generated by network elements having an arbitrary amount of information are converted into alarms of a fixed bit length conforming to the requirements of the network management system.

In the preferred embodiment the hashing function is one known as MD5.

A specific embodiment of the invention will now be described, by way of example only, with reference to the drawing in which:
Figure 1 shows in schematic form an interface in accordance with the invention used in a communications network; and
Figure 2 is an explanatory diagram.

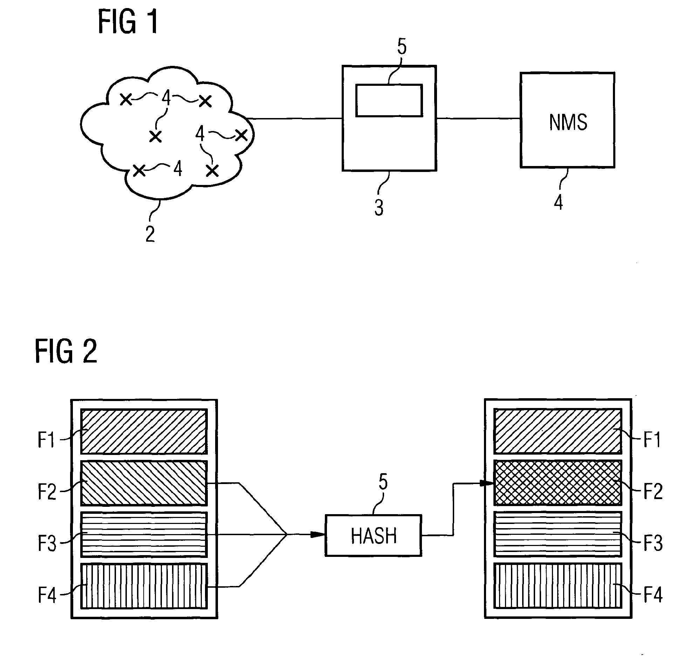

With reference to figure 1, a communications system 1 comprises a network 2 including a large number of network elements 4. Alarms from the network elements 4 are coupled by an interface 3 to a network management system 4 (NMS).

The interface 3 is a suitably programmed computer including a hashing processor 5. The hashing processor 4 applies a hashing function to the incoming alarms. The hashed alarms are then output to the NMS 4.

The hashing function used is MD5.

The hashing function produces a digest from the incoming alarms of those fields of the alarm which cannot be directly processed by the NMS 4. This digest is input into a field which can be processed by the NMS 4. This is depicted in figure 2. It will be seen that the data in fields F1 to F4 is taken by the hash function and input into field F2 of the output alarm.

## Claims

1. An interface for a network management system to provide compatible alarms thereto derived from alarms generated by network elements which interface comprising an input for accepting incoming alarms generated by network elements, a hashing processor for applying a hash function to the incoming alarms to produce hashed alarms and an output for coupling the hashed alarms to the network management system.

2. An interface as claimed in claim 1 wherein the hashing function is an MD5 function.

3. A communications system comprising a network of network elements, a network management system and an interface as claimed in claims 1 or 2.
